# EUROPEAN PATENT APPLICATION

(11) **EP 2 584 543 A2**
(43) Date of publication of application: **24.04.2013**
(21) Application number: 12189291.3
(22) Date of filing: 19.10.2012
(51) Int. Cl.: G07D 7/12

(54) **Image sensor unit and image reading apparatus**

(30) Priority: 21.10.2011 JP 2011231925
(71) Applicant: Canon Components, Inc., Kodama-gun Saitama 369-0393 (JP)
(72) Inventor: Shimoda, Shuuichi, Kodama-gun, Saitama 369-0393 (JP)
(74) Representative: TBK

(57) **Abstract**

An image sensor unit has a first light guide that emits light to a bill, a second light guide that emits light to the bill, a rod-lens array that receives the light emitted by the first light guide and reflected by the bill and the light emitted by the second light guide and transmitted through the bill, and a background member that provides a background color for the bill. The bill can pass through the gap between the rod-lens array and the background member and second light guide. The background member is disposed on the optical axis of the rod-lens array to face the rod-lens array. The second light guide is disposed at a position shifted from the optical axis of the rod-lens array in the conveyance direction of the bill.

## Description

### CROSS-REFERENCE TO RELATED APPLICATIONS

This application is based upon and claims the benefit of priority of the prior Japanese Patent Application No. 2011-231925, filed on October 21, 2011, the entire contents of which are incorporated herein by reference.

### BACKGROUND OF THE INVENTION

### [Field of the Invention]

The present invention relates to an image sensor unit and an image reading apparatus. In particular, it relates an image sensor unit that can be used for both reflection reading and transmission reading of a bill and an image reading apparatus that incorporates the image sensor unit and can perform reflection reading and transmission reading of both surfaces of a bill.

### [Description of the Related Art]

Image reading apparatuses, such as a copier, a facsimile and an image scanner, optically read an illuminated object. In general, such image reading apparatuses are provided with an image sensor unit that optically reads an illuminated object and converts the optical signal into an electrical signal.

Bill handling apparatuses also incorporate an image sensor unit for discriminating types of the bills, counting the bills or authenticating the bills, for example. The image sensor unit of the bill handling apparatus reads a hologram or the like on the bill by reflection reading and reads "a watermark" or the like on the bill by transmission reading. Such image reading apparatuses performs both reflection reading and transmission reading of both surfaces of the bill to improve the precision and reliability of reading. There is a demand that both reflection reading and transmission reading of both surfaces of a bill be performed.

In Patent Document 1, there is described a bill discriminating apparatus that performs transmission reading by detecting light transmitted through a watermark on a bill. In Patent Document 2, there is described an image reading apparatus that performs both reflection reading and transmission reading.
Patent Document 1: Japanese Laid-Open Patent Publication No. 2000-113269
Patent Document 2: Japanese Laid-Open Patent Publication No. 2003-087564

However, according to the configuration described in Patent Document 1, in order to perform reflection reading of a bill, the bill needs to be passed again through the bill discriminating apparatus. Thus, the reading operation takes time and is cumbersome. According to the configuration described in Patent Document 2, the original mat needs to be attached to or removed from the original cover each time reflection reading and transmission reading are performed. Thus, again, the reading operation takes time and is cumbersome.

In view of such disadvantages, there are image reading apparatuses that are provided with an image sensor unit for reflection reading and an image sensor unit for transmission reading and perform reflection reading and transmission reading of the bill in one conveyance thereof. For example, an image reading apparatus is provided two image sensor units for reflection reading of a bill and an image sensor unit for transmission reading of the bill. One of the two image sensor units for reflection reading performs reflection reading of one surface of a bill S, and the other performs reflection reading of the other surface of the bill. Besides, the image sensor unit for transmission reading performs transmission reading of the bill. However, the image reading apparatuses of this type requires four image sensor units in total in order to perform reflection reading and transmission reading of both surfaces of a bill.

The image reading apparatus that performs both reflection reading and transmission reading of both surfaces of a bill has a problem that the quality of the read image deteriorates because of re-illumination.

### SUMMARY OF THE INVENTION

In view of such circumstances, an object of the present invention is to provide an image reading apparatus that can perform reflection reading and transmission reading of a bill and can reduce re-illumination light.

An image sensor unit according to the present invention is an image sensor unit that performs reflection reading and transmission reading of an object to be illuminated, comprising: a first light source having a light emitting module and a light guide that guides light emitted by the light emitting module to the object to be illuminated; a second light source having a light emitting module and a light guide that guides light emitted by the light emitting module to the object to be illuminated; an imaging element that receives light emitted by the first light source and reflected by the illuminated object and light emitted by the second light source and transmitted through the illuminated object; and a background member that provides a background color for the object to be illuminated, wherein the object to be illuminated is capable of passing through a gap between the imaging element and the background member and the second light source, the background member is disposed on an optical axis of the imaging element to face the imaging element, and the second light source is disposed at a position shifted from the optical axis of the imaging element.

An image sensor unit according to the present invention is an image sensor unit that performs reflection reading and transmission reading of an object to be illuminated, comprising: a first sub unit including a first light source having a light emitting module and a light guide that guides light emitted by the light emitting module to the object to be illuminated, and an imaging element that receives light from the illuminated object; and a second sub unit including a second light source having a light emitting module and a light guide that guides light emitted by the light emitting module to the object to be illuminated, and a background member that provides a background color for the object to be illuminated, wherein the first sub unit and the second sub unit are disposed to face each other, and the object to be illuminated is capable of passing through a gap between the first sub unit and the second sub unit, and the background member is disposed on an optical axis of the imaging element to face the imaging element, and the second light source is disposed at a position shifted from the optical axis of the imaging element.

An image reading apparatus according to the present invention is an image reading apparatus comprising two image sensor units that perform reflection reading and transmission reading of both surfaces of an object to be illuminated, wherein the image sensor unit comprises: a first light source having a light emitting module and a light guide that guides light emitted by the light emitting module to the object to be illuminated; a second light source having a light emitting module and a light guide that guides light emitted by the light emitting module to the object to be illuminated; an imaging element that receives light emitted by the first light source and reflected by the illuminated object and light emitted by the second light source and transmitted through the illuminated object; and a background member that provides a background color for the object to be illuminated, the object to be illuminated being capable of passing through a gap between the imaging element and the background member and the second light source, the background member being disposed to face the imaging element, and the second light source being disposed at a position shifted from the imaging element, and one of the two image sensor units is disposed to perform reflection reading and transmission reading of one surface of the illuminated object, and the other of the two image sensor units is disposed to perform reflection reading and transmission reading of the other surface of the illuminated object.

An image reading apparatus according to the present invention is an image reading apparatus comprising two image sensor units that perform reflection reading and transmission reading of both surfaces of an object to be illuminated, wherein the image sensor unit comprises: a first sub unit including a first light source having a light emitting module and a light guide that guides light emitted by the light emitting module to the object to be illuminated, and an imaging element that receives light from the illuminated object; and a second sub unit including a second light source having a light emitting module and a light guide that guides light emitted by the light emitting module to the object to be illuminated, and a background member that provides a background color for the object to be illuminated, the object to be illuminated being capable of passing through a gap between the first sub unit and the second sub unit, the background member being disposed on an optical axis of the imaging element to face the imaging element, and the second light source being disposed at a position shifted from the optical axis of the imaging element, and one of the two image sensor units is disposed to perform reflection reading and transmission reading of one surface of the illuminated object, and the other of the two image sensor units is disposed to perform reflection reading and transmission reading of the other surface of the illuminated object.

### BRIEF DESCRIPTION OF THE DRAWINGS

Fig. 1 is a schematic cross-sectional view showing a configuration of an image sensor unit according to an embodiment of the present invention;
Fig. 2 is a schematic cross-sectional view showing a configuration of essential parts of an image reading apparatus according to an embodiment of the present invention; and
Fig. 3 is a schematic cross-sectional view showing a configuration of a conventional image reading apparatus.

### DETAILED DESCRIPTION OF THE PREFERRED EMBODIMENTS

In the following, embodiments of the present invention will be described in detail with reference to the drawings.

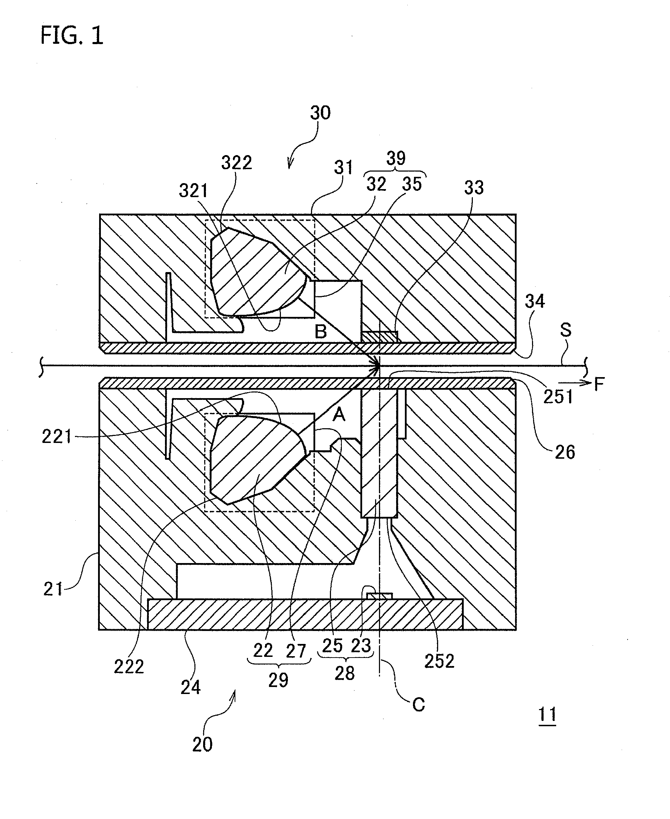

First, an image sensor unit 11 according to an embodiment of the present invention will be described. The image sensor unit 11 can perform both reflection reading and transmission reading of one or the other of surfaces of a bill S, which is an object to be illuminated. Fig. 1 is a schematic cross-sectional view showing a configuration of the image sensor unit 11. The arrow F in Fig. 1 indicates a direction of conveyance of the bill S. As shown in Fig. 1, the image sensor unit 11 has a first sub unit 20 and a second sub unit 30. The first sub unit 20 and the second sub unit 30 are disposed to face each other. The bill S can pass through a gap between the first sub unit 20 and the second sub unit 30.

The first sub unit 20 has a first casing (housing) 21, a first light emitting module 27, a first light guide 22, a rod-lens array 25 serving as an imaging element, a sensor substrate 24 and a first cover member 26.

The first casing 21 is a member that forms a housing of the first sub unit 20. The first casing 21 is a substantially rod-shaped member. The direction perpendicular to the sheet of Fig. 1 is the longitudinal direction of the first casing 21. In the first casing 21, a space capable of housing the first light guide 22 fitted or otherwise placed in the space, a space capable of housing the rod-lens array 25, and a space capable housing the sensor substrate 24 are formed. Further, a space for housing the first light emitting module 27 is formed at an end of the first casing 21 in the longitudinal direction. The first casing 21 is made of a resin material, for example.

The first light emitting module 27 and the first light guide 22 form a first light source 29. In other words, the first sub unit 20 of the image sensor unit 11 has the first light source 29 that includes the first light emitting module 27 and the first light guide 22. The first light source 29 can emit light to the bill S. The first light emitting module 27 can emit light of a predetermined color. For example, the first light emitting module 27 can be a point light source comprising light emitting devices of red, green and blue (LED packages of the colors, for example). The first light guide 22 can shape the light emitted by the first light emitting module 27 into a line and emit the light to the bill S. The first light guide 22 is a substantially rod-shaped member that is substantially transparent and has a predetermined cross-sectional shape. The direction perpendicular to the sheet of Fig. 1 is the longitudinal direction of the first light guide 22. The first light guide 22 is made of an acrylic resin or polycarbonate, for example. The first light guide 22 has an emission surface 221 and a reflection surface 222 formed as parts of the side surface thereof. The emission surface 221 is a surface from which light is emitted to the bill S. The reflection surface 222 is a surface characterized by high light reflectivity and diffusivity on which a pattern (not shown) is formed of a light reflecting paint by silk screen printing or other techniques. Both the emission surface 221 and the reflection surface 222 are band-shaped surface extending in the longitudinal direction. The emission surface 221 and the reflection surface 222 are formed at opposite positions.

The rod-lens array 25 and the sensor substrate 24 form a light receiving part 28. In other words, the first sub unit 20 of the image sensor unit 11 has the light receiving part 28 that includes the rod-lens array 25 and the sensor substrate 24. The light receiving part 28 can receive light from the bill S and convert the received light into an electrical signal. The rod-lens array 25 is a member that focuses the light from the bill S onto a photoelectric conversion module 23 (described later) provided on the sensor substrate 24. The rod-lens array 25 has an incident surface 251 and emission surface 252. The incident surface 251 is a surface on which the light from the bill S is incident. The emission surface 252 is a surface from which light is emitted to the photoelectric conversion module 23. The rod-lens array 25 comprises a substantially linear array of a plurality of imaging lenses of an erect equal magnification imaging type. The sensor substrate 24 has a capability of receiving light from the rod-lens array 25 and converting the received light into an electrical signal. On the sensor substrate 24, a plurality of photoelectric conversion elements are mounted in a substantially linear arrangement to form the photoelectric conversion module 23. Alternatively, the photoelectric conversion module 23 may be a line sensor. The direction perpendicular to the sheet of Fig. 1 is the direction of arrangement of the plurality of photoelectric conversion elements or the longitudinal direction of the line sensor. The rod-lens array 25, the photoelectric conversion element and the line sensor can be a known rod-lens array, a known photoelectric conversion element and a known line sensor.

The longitudinal dimensions of the first light guide 22, the rod-lens array 25 and the photoelectric conversion module 23 mounted on the sensor substrate 24 are determined according to the width dimension of the bill S. Note that the dimension of the bill S in the width direction is the dimension in the direction perpendicular to the conveyance direction F. In Fig. 1, the direction perpendicular to the sheet is the width direction of the bill S.

The first cover member 26 has a function of protecting the first light guide 22 and the rod-lens array 25 and a function of keeping the bill S flat. The first cover member 26 is a substantially transparent planar member. The first cover member 26 is disposed in parallel with the conveyance direction F of the bill S. The first cover member 26 can be a plate of glass or a transparent resin material.

The second sub unit 30 has a second casing (housing) 31, a second light emitting module 35, a second light guide 32, a background member 33 and a second cover member 34. The second light emitting module 35, the second light guide 32 and the second cover member 34 can have the same configurations as the first light emitting module 27, the first light guide 22 and the first cover member 26 of the first sub unit 20, respectively. Thus, descriptions of these components will be omitted.

The second light emitting module 35 and the second light guide 32 form a second light source 39. In other words, the second sub unit 30 of the image sensor unit 11 has the second light source 39 that includes the second light emitting module 35 and the second light guide 32. The second light source 39 can emit light to the bill S.

The background member 33 is a member that provides a background color for the bill S in reflection reading of the bill S. The background member 33 is a rod-shaped or band-shaped member of a substantially white or black color. The direction perpendicular to the sheet of Fig. 1 is the longitudinal direction of the background member 33. The background member 33 is detachably provided on the second sub unit 30.

The first sub unit 20 is assembled as follows. The first light emitting module 27, the first light guide 22, the rod-lens array 25, the sensor substrate 24 and the first cover member 26 are assembled into the first casing 21. The first light guide 22 and the rod-lens array 25 are arranged substantially in parallel with each other with the longitudinal directions thereof substantially perpendicular to the conveyance direction F of the bill S. The first light emitting module 27 is arranged so as to be able to emit light to a longitudinal end face of the first light guide 22. Thus, the light emitted by the first light emitting module 27 enters the first light guide 22 at the end face. The light having entered the first light guide 22 is reflected and diffused by the reflection surface 222 and then emitted to be bill S through the emission surface 221. Since the emission surface 221 of the first light guide 22 is a band-shaped surface extending in the longitudinal direction, the light emitted by the first light emitting module 27 is shaped into a line by the first light guide 22. That is, the first light source 29 serves as a line light source as a whole. The axis of the light emitted to the outside from the emission surface 221 of the first light guide 22 is inclined at a predetermined angle with respect to the optical axis of the rod-lens array 25. The arrow A in Fig. 1 schematically indicates the axis of the light emitted from the first light guide 22 (that is, the light emitted by the first light source 29). The first cover member 26 is arranged to cover the emission surface 221 of the first light guide 22 and the incident surface 251 of the rod-lens array 25. The rod-lens array 25 and the photoelectric conversion module 23 mounted on the sensor substrate 24 are arranged with the longitudinal directions thereof substantially in parallel with each other. The emission surface 252 of the rod-lens array 25 faces the photoelectric conversion module 23.

The second sub unit 30 is assembled as follows. The second light emitting module 35, the second light guide 32, the background member 33 and the second cover member 34 are assembled into the second casing 31. The second light guide 32 and the background member 33 are arranged with the longitudinal directions thereof substantially in parallel with each other and substantially perpendicular to the conveyance direction F of the bill S. The second light emitting module 35 is arranged so as to be able to emit light to a longitudinal end face of the second light guide 32. Thus, the light emitted by the second light emitting module 35 enters the second light guide 32 at the end face. The light having entered the second light guide 32 is reflected and diffused by the reflection surface 322 and then emitted to be bill S through the emission surface 321. Since the emission surface 321 of the second light guide 32 is a band-shaped surface extending in the longitudinal direction, the light emitted by the second light emitting module 35 is shaped into a line by the second light guide 32. That is, the second light source 39 serves as a line light source as a whole. The axis of the light emitted to the outside from the emission surface 321 of the second light guide 32 is inclined at a predetermined angle with respect to the optical axis of the rod-lens array 25. The arrow B in Fig. 1 schematically indicates the axis of the light emitted from the second light guide 32 (that is, the light emitted by the second light source 39). The second cover member 34 is arranged to cover the emission surface 321 of the second light guide 32 and the background member 33.

The whole of the image sensor unit 11 is assembled as follows. The image sensor unit 11 has a structure in which the first sub unit 20 and the second sub unit 30 are arranged to face each other. The bill S can pass through the gap between the first sub unit 20 and the second sub unit 30. More specifically, the first cover member 26 of the first sub unit 20 and the second cover member 34 of the second sub unit 30 face each other. The bill S can pass through the gap between the first cover member 26 and the second cover member 34. Further, the incident surface 251 of the rod-lens array 25 of the first sub unit 20 and the background member 33 of the second sub unit 30 face each other. More specifically, the background member 33 is positioned on an extension C of the optical axis of the rod-lens array 25. In this way, the light receiving part 28 of the first sub unit 20 and the background member 33 of the second sub unit 30 face each other.

On the other hand, the incident surface 251 of the rod-lens array 25 of the first sub unit 20 and the second light guide 32 of the second sub unit 30 are displaced from each other in the conveyance direction F of the bill S. More specifically, the second light guide 32 of the second sub unit 30 is not positioned on the extension C of the optical axis of the rod-lens array 25 of the first sub unit 20. In this way, the light receiving part 28 of the first sub unit 20 and the second light source 39 of the second sub unit 30 are displaced from each other in the conveyance direction F of the bill S. The light emitted from the second light guide 32 of the second sub unit 30 is inclined at a predetermined angle with respect to the optical axis of the rod-lens array 25 of the first sub unit 20.

With such a configuration, the first light emitting module 27 effectively serves as a line light source because of the first light guide 22, and the light emitted by the first light emitting module 27 of the first sub unit 20 shaped into a line by the first light guide 22 is emitted to the bill S. The emitted light is reflected by one surface of the bill S and enters the rod-lens array 25 through the incident surface 251. The light having entered the rod-lens array 25 is emitted from the emission surface 252 and is focused on the surface of the photoelectric conversion module 23 on the sensor substrate 24. The photoelectric conversion module 23 receives the focused light and converts the received light into an electrical signal. In this way, the light emitted by the first light source 29 is reflected by one surface of the bill S and then reaches the light receiving part 28. In other words, the light receiving part 28 of the first sub unit 20 can receive the light that is emitted by the first light source 29 and then reflected by one surface of the bill S. Thus, the image sensor unit 11 can perform reflection reading of one surface of the bill S.

The "predetermined angle" between the axis A of the light emitted from the emission surface 221 of the first light guide 22 and the optical axis of the rod-lens array 25 is not particularly limited. It is essential only that the light emitted from the first light guide 22 can reach the incident surface 251 of the rod-lens array 25 after being reflected by one surface of the bill S.

On the other hand, the light emitted by the second light emitting module 35 of the second sub unit 30 is shaped into a line by the second light guide 32 and then emitted to the bill S. The axis B of the light emitted from the second light guide 32 of the second sub unit 30 is inclined with respect to the optical axis of the rod-lens array 25 of the first sub unit 20 toward the rod-lens array 25. That is, the axis B of the light emitted from the second light guide 32 of the second sub unit 30 and the optical axis of the rod-lens array 25 are not parallel with each other but inclined at a predetermined angle. As a result, the emitted light is transmitted through the bill S from the other surface to the one surface and then enters the rod-lens array 25 through the incident surface 251. In this way, the light emitted by the second light source 39 is transmitted through the bill S and then reaches the light receiving part 28. In other words, the light receiving part 28 of the first sub unit 20 can receive light that is emitted by the second light source 39 and then transmitted through the bill S. Thus, the image sensor unit 11 can perform transmission reading of the bill S.

The "predetermined angle" between the axis B of the light emitted from the emission surface 321 of the second light guide 32 and the optical axis of the rod-lens array 25 is not particularly limited. It is essential only that the light emitted from the second light guide 32 can reach the incident surface 251 of the rod-lens array 25 after being transmitted through the bill S.

By the way, if there is no reflection from the bill S during reflection reading (because light passes through the gap between successive bills S or through a damaged part of the bill S, such as a scratch and a cut, for example), or when light is transmitted through the watermark during reading of the watermark, re-illumination light occurs.

The "re-illumination light" refers to light for reflection reading that is incident on (the light guide of) the image sensor for transmission reading, reflected in the light guide and emitted again to the rod-lens array 25. More specifically, the "re-illumination light" refers to part of the light emitted by the first light source 29 for reflection reading that is incident on the second light guide 32 of the second light source 39, reflected in the second light guide 32 and then emitted again to the rod-lens array 25.

Part of the light is focused through the rod-lens array 25 to cause a noise component in the output of the image sensor unit, thereby changing the reference level of the background color. Consequently, the difference between the output (signal component) in the case where there is a reflection from the bill S and the noise component caused by stray light decreases, the contrast becomes obscure, and the precision of the read image decreases.

According to the present invention, the background member 33 provides the background color for the bill S in reflection reading of the bill S. In the image sensor unit 11, white or black background member is used. If the background member 33 is white, the background member 33 can be used as a white reference for color correction or calibration. Thus, color correction or calibration can be performed each time reflection reading is performed, so that the precision of reading can be maintained. Further, when there is no reflection from the bill S during reflection reading (because light passes through the gap between successive bills S or through a damaged part of the bill S, such as a scratch and a cut, for example) or when light is transmitted through the watermark during reading of the watermark, the background member 33 can reflect the light from the first light emitting module 27. Therefore, the re-illumination light can be reduced, and the reflection light can be more readily corrected because of the constant reflectance of the background member 33.

If the background member 33 is black, the background member 33 can be used as a black reference for color correction or calibration. Thus, color correction or calibration can be performed each time reflection reading is performed, so that the precision of reading can be maintained, and the precision of extraction of the contour of the bill S can be improved. Therefore, the precision of recognition of the bill S can be improved. Further, when there is no reflection from the bill S during reflection reading (because light passes through the gap between successive bills S or through a damaged part of the bill S, such as a scratch and a cut, for example) or when light is transmitted through the watermark during reading of the watermark, the background member 33 can absorb the light from the first light emitting module 27 to reduce the re-illumination light. Further, the see-through effect in reading can be reduced.

Since the background member 33 is detachable from the second sub unit 30, the background member 33 can be readily replaced. The background color for the bill S can be changed by replacing the background member 33. Therefore, the re-illumination light can be reduced, and the reference level corresponding to the background color can be stably achieved.

As described above, the image sensor unit 11 can perform both reflection reading and transmission reading of one or the other of the surfaces of the bill S.

Next, an image reading apparatus 1 according to an embodiment of the present invention will be described. The image reading apparatus 1 is provided with the image sensor unit 11. The image reading apparatus 1 is a sheet-feed type image reading apparatus. That is, the image reading apparatus 1 can perform reflection reading and transmission reading of both surfaces of the bill S while conveying the bill S in a direction of the plane of the bill S.

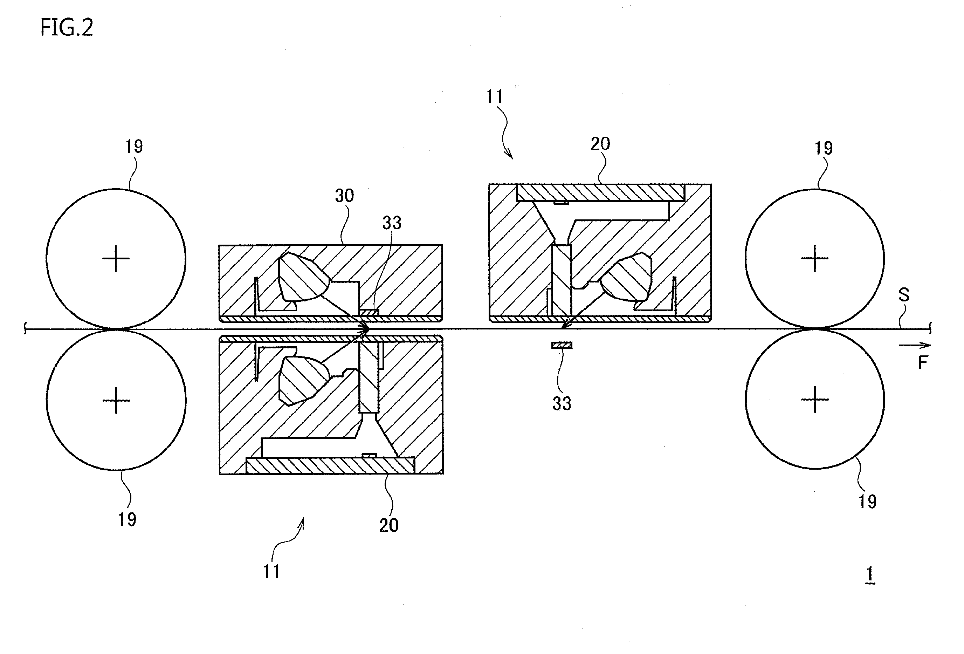

Fig. 2 is a schematic cross-sectional view showing a configuration of essential parts of the image reading apparatus 1. As shown in Fig. 2, the image reading apparatus 1 has conveyor rollers 19 and two image sensor units 11. One of the two image sensor units 11 does not have the second sub unit 30, although it has the background member 33. That is, that one of the two image sensor units 11 does not perform transmission reading, although it performs reflection reading of one surface of the bill S. The conveyor rollers 19 are rotated by a motive power mechanism (not shown) and can convey the bill S in the direction of the plane. The arrow F in Fig. 1 indicates the direction of conveyance of the bill S by the conveyor rollers 19. The two image sensor units 11 are arranged side by side in the conveyance direction F of the bill S. The two image sensor units 11 are arranged in opposite postures (180°-inverted with respect to the bill S, for example).

The one of the two image sensor units 11 performs reflection reading of the one surface of the bill S. The other of the two image sensor units 11 can perform both reflection reading and transmission reading of the other surface of the bill S. In this way, the image reading apparatus 1 has the two image sensor units 11 arranged in the opposite postures and therefore can perform reflection reading of both surfaces of the bill S. Further, the other image sensor unit 11 can perform transmission reading of the bill S.

The image reading apparatus 1 performs reflection reading and transmission reading of both surfaces of the bill S as the conveyor rollers 19 convey the bill S. Reflection reading involves an operation of the first light source 29 emitting red light and the light receiving part 28 receiving the reflection light, an operation of the first light source 29 emitting green light and the light receiving part 28 receiving the reflection light, and an operation of the first light source 29 emitting blue light and the light receiving part 28 receiving the reflection light. Transmission reading involves an operation of the second light source 39 emitting red light and the light receiving part 28 receiving the reflection light, an operation of the second light source 39 emitting green light and the light receiving part 28 receiving the reflection light, and an operation of the second light source 39 emitting blue light and the light receiving part 28 receiving the reflection light. The image reading apparatus 1 periodically repeats the operations described above while conveying the bill S. In this way, the image reading apparatus 1 can perform reflection reading and transmission reading of both surfaces of the bill S in one conveyance thereof.

The parts of the image sensor units 11 whose illustration or description has been omitted can be configured the same as those of various known conventional image sensor units. Similarly, the parts of the image reading apparatus 1 whose illustration or description has been omitted can be configured the same as those of various known conventional sheet-feed type image reading apparatuses.

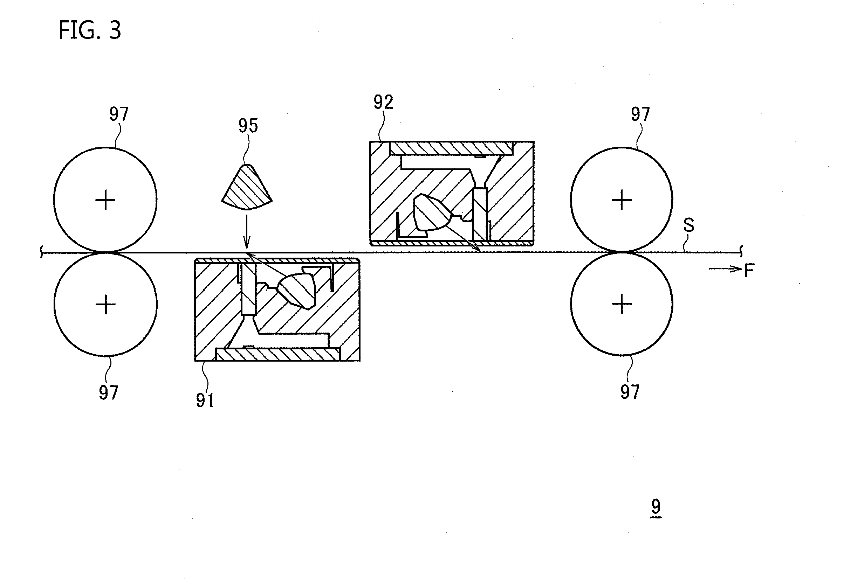

As shown in Fig. 3, an attempt is being made to integrate an image sensor unit for reflection reading with a transmission reading light source. Fig. 3 is a schematic cross-sectional view showing a configuration of a conventional image reading apparatus capable of performing reflection reading and transmission reading of both surfaces of a bill. As shown in Fig. 3, an image reading apparatus 9 has conveyor rollers 97 that convey a bill S, an image sensor unit 91 that performs reflection reading and transmission reading of the bill S, and an image sensor unit 92 that performs reflection reading of the bill S. The image reading apparatus 9 of this type has a light source 95 that emits light for transmission reading disposed to face the image sensor unit 91 that performs reflection reading and transmission reading. In this way, the number of components is reduced.

However, according to this configuration, if there is no reflection from the bill S during reflection reading (because light passes through the gap between successive bills S or through a damaged part of the bill S, such as a scratch and a cut, for example), or when light is transmitted through a watermark during reading of the watermark, the light from the image sensor unit 91 enters the light guide in the light source 95 and then is sometimes emitted again therefrom. Part of the light is focused through the rod-lens array as re-illumination light to change the reference level of the background color (black reference: no reflection light), thereby sometimes deteriorating the quality of the read image.

The image sensor unit 11 and the image reading apparatus 1 have the following effects and advantages.

Either one of the two image sensor units 11 can perform both reflection reading and transmission reading of one surface of the bill S. Since the two image sensor units 11 are disposed in the opposite postures, reflection reading and transmission reading of both surfaces of the bill S can be performed. Thus, compared with an arrangement in which the image sensor unit 11 for reflection reading and the image sensor unit 11 for transmission reading are separate from each other, the number of image sensor units 11 can be reduced. As a result, the size of the image reading apparatus 1 can be reduced. In particular, the dimension of the image reading apparatus 1 in the conveyance direction F of the bill S can be reduced.

Since one of the image sensor units 11 can perform both reflection reading and transmission reading, the number of components can be reduced. In particular, the number of photoelectric conversion modules 23 can be reduced. Further, since the two image sensor units 11 have the first sub units 20 having the same configuration, the number of types of the image sensor units 11 can be reduced. As a result, the price and the complexity of the structure of the image reading apparatus 1 can be reduced, for example.

The image sensor unit 11 has the background member 33 that provides the background color. Therefore, any background color can be set. In particular, if the background member 33 is replaceable, the background color can be readily changed. Further, the image sensor unit 11 can perform transmission reading, although it has the background member 33 that provides the background color in reflection reading. That is, both the background member 33 and the light source for transmission reading would otherwise have to be disposed so as to face the light receiving part 28. In that configuration, the background member 33 and the light source would interfere with each other. Therefore, it is difficult to configure one image sensor unit 11 to perform both reflection reading, which uses the background member 33, and transmission reading, which uses the light source. However, in the image sensor unit 11, the background member 33 is disposed on the optical axis of the rod-lens array 25 so as to face the rod-lens array 25, and the second light guide 32 (the second light source 39) is disposed at a position shifted from the optical axis of the rod-lens array 25. Thus, the background member 33 used for reflection reading and the second light guide 32 used for transmission reading are disposed at positions shifted in the conveyance direction F of the bill S. And the light emitted from the second light guide 32 is inclined at a predetermined angle with respect to the optical axis of the rod-lens array 25, thereby allowing transmission reading. Therefore, the image sensor unit 11 can perform both reflection reading, which uses the background member 33, and transmission reading, which uses the second light source 39, while preventing interference between the background member 33 and the second light guide 32.

In the case where the background member 33 is black, the background member 33 can be used as a black reference for calibration, so that the precision of reading can be maintained or improved, and the precision of extraction of the contour of the bill S can be improved. Further, even if there is no reflection from the bill S during reflection reading (because light passes through the gap between successive bills S or through a damaged part of the bill S, such as a scratch and a cut, for example), or even when light is transmitted through the watermark during reading of the watermark, the background member 33 can absorb the light from the first light emitting module 27 to reduce re-illumination light. Further, the background member 33 can also reduce the see-through effect in reading. On the other hand, in the case where the background member 33 is white, the background member 33 can be used as a white reference for calibration, so that the precision of reading can be maintained or improved. Further, even if there is no reflection from the bill S during reflection reading (because light passes through the gap between successive bills S or through a damaged part of the bill S, such as a scratch and a cut, for example), or even when light is transmitted through the watermark during reading of the watermark, the background member 33 can reflect the light from the first light emitting module 27. As a result, re-illumination light can be reduced, and the reflection light can be more readily corrected because of the constant reflectance of the background member 33.

The desired background color for the bill S may vary with the user. If the background member 33 is replaceable, the background color can be readily changed to meet the demands of different users. Thus, the re-illumination light can be reduced, and the reference level corresponding to the background color can be stably achieved.

Note that the arrangement may include switching means of automatically switching among background colors. For example, the background member 33 may have a white region and a black region, and a driving mechanism that moves back and forth the background member 33 in the conveyance direction F of the bill S, for example, may be provided. And either the white region or the black region is positioned on the extension C of the optical axis of the rod-lens array 25 by moving the background member 33 by means of the driving mechanism. In this way, the background color in reflection reading can be switched. Alternatively, one surface of the background member 33 may be white, whereas the other surface may be black, and a driving mechanism that rotates the background member 33 may be provided. With such a configuration, the background color in reflection reading can be changed by rotating the background member 33. As a further alternative, the background member 33 may be a belt-shaped member having a white region and a black region, and a driving mechanism that winds up the background member 33 may be provided. With such a configuration, the background color in reflection reading can be changed by winding up the background member 33. As described above, various well-known conventional configurations can be used to change the background color.

Although embodiments of the present invention have been described with reference to the drawings, the present invention is not limited to the embodiments described above in any sense. The embodiments described above are intended only to provide specific implementations of the present invention but not to limit the technical scope of the present invention. In other words, the present invention can be embodied in many forms without departing from the technical spirits and main features thereof. For example, although the sheet-feed type image reading apparatus has been described in the above embodiments, any other types of image reading apparatuses can be used. The present invention can also be applied a flatbed scanner or the like. Although the bill S has been described as an example of the object to be illuminated, the object to be illuminated is not limited to any particular object. Although the rod-lens array has been described as an example of the imaging element, the imaging element is not limited to the rod-lens array. The imaging element may be any optical member that can focus light transmitted through the illuminated object or light reflected by the illuminated object on the surface of the photoelectric conversion module.

Although the arrangements that perform both reflection reading and transmission reading of both surfaces of the bill S have been described in the above embodiments, the present invention is not limited to these arrangements. For example, only reflection reading may be performed for one of the surfaces of the bill S, and only transmission reading may be performed for the other surface of the bill S. Alternatively, both reflection reading and transmission reading may be performed for one of the surfaces of the bill S, and either reflection reading or transmission reading may be performed for the other surface.

Further, the density of black or white of the black or white reference may be changed as required.

The present invention is effective as an image reading apparatus.

According to the present invention, the image reading apparatus is provided with the image sensor unit that performs reflection reading and transmission reading, the background member is disposed on the optical axis of the imaging element to face the imaging element, and the second light source is disposed at a position shifted from the optical axis of the imaging element. Therefore, the light from the light source for reflection reading can be received by the background member, so that the light from the first light source is prevented from directly entering the second light source even in a region where there is no object to be illuminated. Thus, the re-illumination light can be reduced, and the reference level corresponding to the background color can be stably achieved.

It should be noted that the above embodiments merely illustrate concrete examples of implementing the present invention, and the technical scope of the present invention is not to be construed in a restrictive manner by these embodiments. That is, the present invention may be implemented in various forms without departing from the technical spirit or main features thereof.

An image sensor unit has a first light guide that emits light to a bill, a second light guide that emits light to the bill, a rod-lens array that receives the light emitted by the first light guide and reflected by the bill and the light emitted by the second light guide and transmitted through the bill, and a background member that provides a background color for the bill. The bill can pass through the gap between the rod-lens array and the background member and second light guide. The background member is disposed on the optical axis of the rod-lens array to face the rod-lens array. The second light guide is disposed at a position shifted from the optical axis of the rod-lens array in the conveyance direction of the bill.

## Claims

1. An image sensor unit (11) that performs reflection reading and transmission reading of an object (S) to be illuminated, comprising:
a first light source (29) having a light emitting module (27) and a light guide (22) that guides light emitted by said light emitting module (27) to said object (S) to be illuminated;
a second light source (39) having a light emitting module (35) and a light guide (32) that guides light emitted by said light emitting module (35) to said object (S) to be illuminated;
an imaging element (25) that receives light emitted by said first light source (29) and reflected by said illuminated object (S) and light emitted by said second light source (39) and transmitted through the illuminated object (S); and
a background member (33) that provides a background color for said object (S) to be illuminated,
wherein said object (S) to be illuminated is capable of passing through a gap between said imaging element (25) and said background member (33) and said second light source (39), said background member (33) is disposed on an optical axis of said imaging element (25) to face said imaging element (25), and said second light source (39) is disposed at a position shifted from the optical axis of said imaging element (25).

2. The image sensor unit according to claim 1, wherein an axis of the light emitted by said second light source (39) is inclined with respect to the optical axis of said imaging element (25).

3. The image sensor unit (11) according to claim 1 or 2, wherein
said first light source (29) and said imaging element (25) are included in a first sub unit (20); and
said second light source (39) and said background member (33) are included in a second sub unit (30),
wherein said first sub unit (20) and said second sub unit (30) are disposed to face each other, and said object (S) to be illuminated is capable of passing through a gap between said first sub unit (20) and said second sub unit (30).

4. An image reading apparatus (1) comprising two image sensor units (11) that perform at least one of reflection reading and transmission reading of both surfaces of an object (S) to be illuminated,
wherein the image sensor units (11) comprises: a first light source (29) having a light emitting module (27) and a light guide (22) that guides light emitted by said light emitting module (27) to said object (S) to be illuminated; a second light source (39) having a light emitting module (35) and a light guide (32) that guides light emitted by said light emitting module (35) to said object (S) to be illuminated; an imaging element (25) that receives light emitted by said first light source (29) and reflected by said illuminated object (S) and light emitted by said second light source (39) and transmitted through the illuminated object (S); and a background member (33) that provides a background color for said object (S) to be illuminated, said object (S) to be illuminated being capable of passing through a gap between said imaging element (25) and said background member (33) and said second light source (39), said background member (33) being disposed on an optical axis of said imaging element (25) to face said imaging element (25), and said second light source (39) being disposed at a position shifted from the optical axis of said imaging element (25), and
one of said image sensor units (11) is disposed to perform reflection reading and transmission reading of one surface of said illuminated object (S), and the other of said image sensor units (11) is disposed to perform reflection reading and/or transmission reading of the other surface of said illuminated object (S).

5. The image reading apparatus (1) according to claim 4, wherein an axis of the light emitted by said second light source (39) is inclined with respect to the optical axis of said imaging element (25).

6. The image reading apparatus (1) according to claim 5, wherein said background member (33) has a plurality of background colors, and said image reading apparatus (1) further comprises switching means of positioning one of said plurality of background colors to face said imaging element (25).

7. An image reading apparatus (1) comprising two image sensor units (11) that perform reflection reading and transmission reading of both surfaces of an object (S) to be illuminated,
wherein the image sensor unit (11) comprises: a first sub unit (20) including a first light source (29) having a light emitting module (27) and a light guide (22) that guides light emitted by said light emitting module (27) to said object (S) to be illuminated, and an imaging element (25) that receives light from said illuminated object (S); and a second sub unit (30) including a second light source (39) having a light emitting module (35) and a light guide (32) that guides light emitted by said light emitting module (35) to said object (S) to be illuminated, and a background member (33) that provides a background color for said object (S) to be illuminated, said object (S) to be illuminated being capable of passing through a gap between said first sub unit (20) and said second sub unit (30), said background member (33) being disposed on an optical axis of said imaging element (25) to face said imaging element (25), and said second light source (39) being disposed at a position shifted from the optical axis of said imaging element (25), and
one of said image sensor units (11) is disposed to perform reflection reading and transmission reading of one surface of said illuminated object (S), and the other of said image sensor units (11) is disposed to perform reflection reading and/or transmission reading of the other surface of said illuminated object (S).

8. The image reading apparatus (1) according to claim 7, wherein an axis of light emitted by said second light source (39) of said second sub unit (30) is inclined with respect to the optical axis of said imaging element (25).

9. The image reading apparatus (1) according to claim 8, wherein said background member (33) has a plurality of background colors, and said image reading apparatus (1) further comprises switching means of positioning one of said plurality of background colors to face said imaging element (25).
